Europäisches Patentamt

**European Patent Office**

**Office européen des brevets**

(19)

(11) Numéro de publication: **0 083 317**
**A2**

(12)

# DEMANDE DE BREVET EUROPEEN

(21) Numéro de dépôt: **82830174.7**

(22) Date de dépôt: **15.06.82**

(51) Int. Cl.³: **B 62 D 33/08**

(30) Priorité: **21.12.81 IT 3162581 U**

(43) Date de publication de la demande:
**06.07.83 Bulletin 83/27**

(84) Etats contractants désignés:
**AT BE CH DE FR GB IT LI NL SE**

(71) Demandeur: **Ragonese, Giuseppe**
**Viale Francia, 4**
**Palermo(IT)**

(72) Inventeur: **Ragonese, Giuseppe**
**Viale Francia, 4**
**Palermo(IT)**

(54) **Dispositif pour doubler le cubage et augmenter la surface utile du plancher des véhicules de transport.**

(57) L'invention est représentée par un appareil capable de permettre le déplacement des flanes d'un véhicule, ainsi que de moitié du pavement et de la couverture à l'effet d'obtenir le redoublement du volume et du paln de piétement utile dans des véhicules en général.

fig 3

EP 0 083 317 A2

Croydon Printing Company Ltd

Description de l'invention ayant pour titre: "DISPOSITIF POUR LE REDOUBLEMENT DU CUBAGE ET DE LA SURFACE DE PIETI NEMENT UTILE POUR DES VEHICULES".
au nom du professeur Ragonese Giuseppe.

– 2 –

La présente invention se rapporte à un dispositif qui permet le redoublement du cubage et de la surface de piétinement utile pour des véhicules en général. Le principe informateur sur lequel se fonde l'invention, consiste dans la préparation d'un dispositif apte à consentir le déplacement des deux flancs du véhicule: de la moitié du plancher, et de la moitié de la conveture, toutes deux solidaires aux flancs.

La solidarité entre le plancher et les francs, ainsi que celle de tous les accesoires dont l'usage est de fayon stable relié aux dites parties rendues mobiles grâce au dispositif dont il est questinn, consent la translation simultanée des deux parties, et par conséquent leur remise en place définitive, sans qu'il soit nécessaire au préalable de pourvoir à leur déplacement, et à la successive remise en place une fois le redoublement advenu.

Il faut noter aussi, qu'une partie de la superficie des véhicules actuellemnt en commerce, est employée comme espace de dégagemnt entre les différents locaux où elle pent s'articuler, et elle soustrait ainsi un espace utile aux locaux même.

Avec le dispositif qui consent le redoublement de la superficie utile, l'espace de légagement assume une consistance telle, que l'on peut intégralement exploiter cet espace, ayant aussi la possibilité de rendre tous les locaux intercommunicants, même quand le véhicule est en marche (c'est à dire fermé).

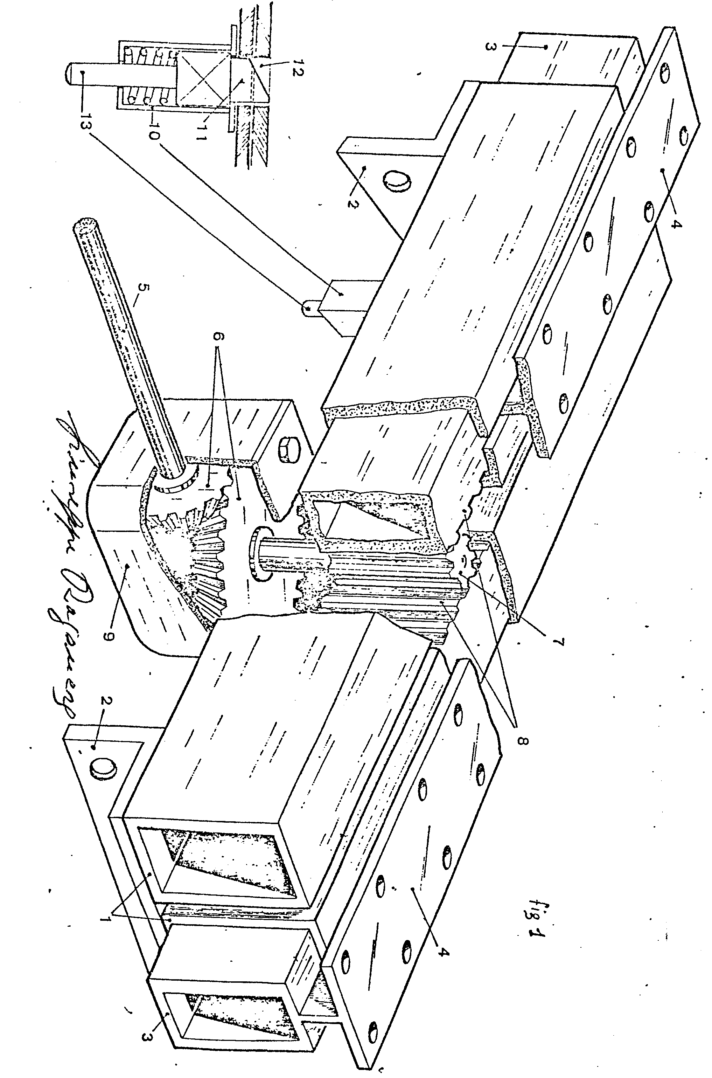

La figure 1 montre une vue en perspective des profilés de soutien et de déplacement des flancs; cette figure représente aussi deux profilés externes qui présentent, pour moins de la moitié de leur longueur, un sillon longitudinal, en correspondance avec leur face supérieure. Ces deux profilés sont rendus solidaires au châssis du milieu, au moyen de supportsen équerre 2; à l'interieur des profilés externes glissent deux autres profilés 3, soutenant chacuns deux aileros de longueur égale à la moitié de la longueur des profilés.

L'aileron, dans sa partie terminale interne, est soutenu au repoussé par l'âme solidaire au profilé,et par conséquent, le sillon longitudinal obtenu sur la face supérieure du profilé externe, intéresse une longueur moindre à la motié de la longueur du profilé même.

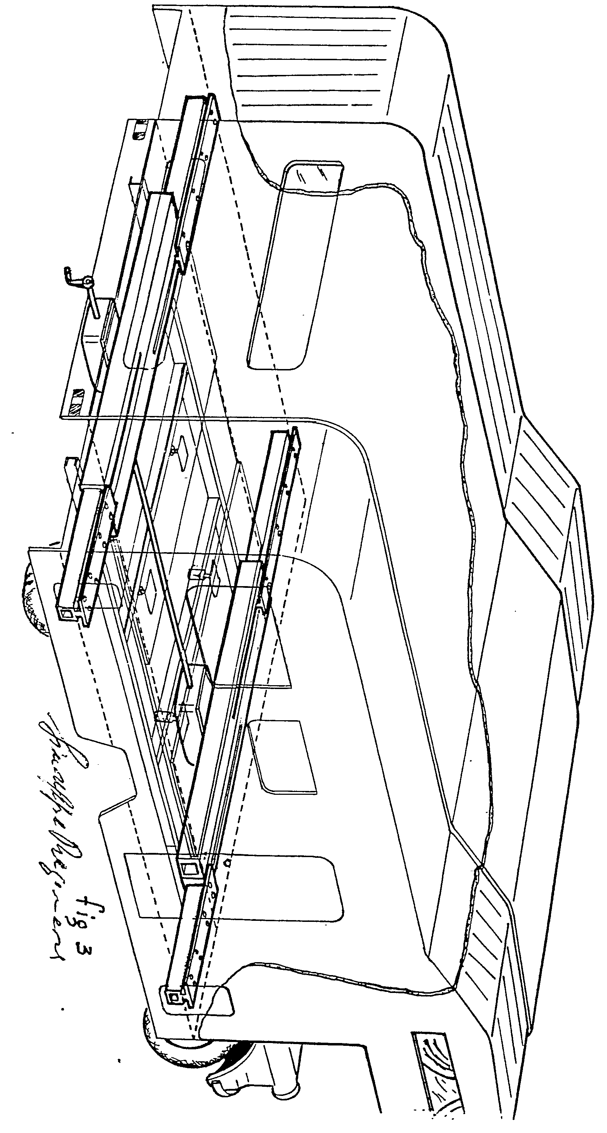

Sur les-dits ailerons, sont respectivement rendus solidaires les flancs du véhicule dont on veut doubler le cubage, figure 3.

La mouvement est transmis aux profilés par un arbre moteur 5, qui au moyen d'un renvoi, costitué par un couple de roues dentées coniques 6, qui se rapportent apportunément aux poids a transporter et au frottement à vaincre, trasmet le mouvement à un pignon denté 7, qui engréne avec le deux crémailleres 8, obtenues pour la moitié de leur longueur sur les deux faces latérales externes des profilés internes.

Les profilés externes devront être réalisés en acier résistant à l'usure.

Le mécanisme décrit, se loge dans la bôite 9 rendue solidaire aux profilés externes.

Le détail de la figure 1 représente un taquet d'arrêt 10, qui permet de bloquer le déplacement du profilé interne, par rapport au profilé externe, une fois atteinte la configuration finale préfixée.

Pendant le déplacement du profilé interne, le taquet reste engagé dans le trou 11, obtenu sur la face inferieure du profilé externe, quand par l'action du meccanisme décrit ci-dessus, le profilé interne aura rejoint la position finale.

Le trou 12, obtenu sur la face inferieure du profilé interne, se sera porté en correspondance au trou 11, permettant ainsi le déclenchement du taquet d'arrêt qui ira s'engager dans le susdit deuxième troun empéchent le déplacement ultérieur du profilé.

La tête du taquet est conformée en plan incliné pour permettre le débrayage du même taquet, du moment que l'on vent faire reprendre au véhicule son volume originaire.

Même si chaque couple de profilés est pourvu de deux taquets d'arrêt, un seul des deux aura la tige 13, saillante, et cela à deux effets:

1°) voulant réaliser les déplacements automatiquement, et non manuellement, par l'actionament d'un interrupeteur place sur le tableau de bord de la cabine de conduite, on branche un dispositif électrique normal qui permet la mise en foction du cinématisme décrti ci-dessus, pour de déplacement des flancs. Une fois la position d'arrêt atteinte, on a, en correspondance, l'insertion du taquet dans le trou 12, la tige 13, se souléve interrompant ainsi le circuit d'alimentation de la mise en marche du cinématisme.

2°) à l'élévation de la tige correspond encore la prédisposition à la fermeture d'un autre circuit éleetrique d'alimentation, commandé toujours par un interupteur indépendent, et qui agit sur un quelconque disposif oléodynamique, apte à faire déplacer vers le haut, le plancher placé sous la surface de piétinement à véhicule fermé pour constituer le plancher de la nouvelle configuration.

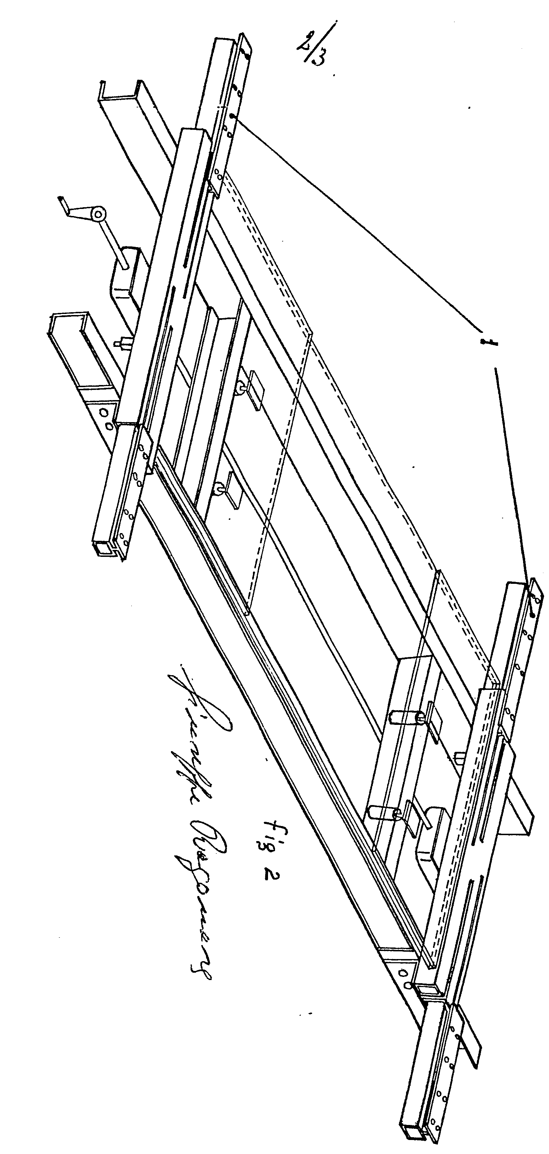

La figure 2 illustre la disposition du disposif décrit sur le châssis d'un véhicule, où en vue de l'obtention du reboublement du cubage et de la surface de piétinement, ont été prédésposés deux couples seulement de glissiéres 1. De cette figure on peut déduire comment la surface de piétinement est réalisée en trois parties, et précisement:

- d'une partie centrale occupant la plus grande partie de la superficie qui repose sur quatre martinets.
- de deux parties de dimensions mineures, qui muniest de cherniérés, sont renversées pour constituer, avec la partie centrale, la surface de piétinement.

Si on voulait obtenir le redoublement du cubage et de la surface de piétinement utile sur un véhicule de longueur supérieure à la normale, le nombre de couples de glissières sera augmenté en fonction de la longueur du véhicule à construire, étant bien entendu que le principe informateur pour la prédisposition de la surface de piétinement sera articulé en deux parties centrales, occupant une superficie majeure, et resposant chacunes sur quatre martinets; et en deux parties de dimensions mineures qui munies de charniérés sont renversée pour constituer, aver les deux parties centrales, la surface de piétinement, et d'une autre partie, alle aussi munie de charniéres et reliée à une des deux parties centrales, qui ira recouvrir la glissiére pour constituer un plan unique.

La figure 3 illustre une application du principe décrit, au cas d'une auto-caravans.

0083317

<u>R E V E N D I C A T I O N S</u>

- 5 -

1) Dispositif apte à consentir le déplacement des deux flan cs d'un véhicule, de la moitié du plancher et de la moitié de la couverture, caractérisé par des glissiéres de soutien, réalisés en profilés solidaires au châssis du véhicule, et des glissiéres de déplacement internes aux preécédentes,par rapport auxquelles elles se déplacent; elles  aussi réalisé es en profilés soutenant chacunes un aileron auquel est ren du solidaire le franc mobile.

2) Dispositif, selon la reventidcation précédente, caractérisé par les organes qui impriment le mouvement aux profilés internes, au moyen d'un cinématisme constitué par un ar bre moteur, par un couple de roues dentées coniques, et par un pignon denté, engendrant avec les crémaillères obtenues pour la motié de leur longueur sur les faces latérales externes, des profilés internes.

3) Dispositif selon les revendication précédentes, pour le bolcage de la glissiére de déplacement carcterisé par un ta quet d'arrêt.

4) Dispositif selon les revendications précédentes, pour le déblocage de la glissière de déplacement, caractérisé par la . forme de la tête du taquet d'arrêt.

5) Dispositif selon les revendications précédentes, pour la predisposition à la fermeture ou ouverture des circuits d'a limentation pour la mise en marche des cinématismes qui impriment le mouvement aux profilés internes, et de commandement du dispositif oléodynamique pour le soulèvement du plan cher, pour la prédisposition de la surface de piétinement.

6) Dispositif selon les revendications précédentes, et selon ce qui a été décrit et illustré,  pour les buts dont l'invention fait l'objet.

0083317

fig 1

fig 2

0083317

fig 3